# EUROPÄISCHE PATENTANMELDUNG

(11) **EP 1 726 624 A2**
(43) Veröffentlichungstag der Anmeldung: **29.11.2006**
(21) Anmeldenummer: 06002516.0
(22) Anmeldetag: 08.02.2006
(51) Int. Cl.: C09B 67/20, C09D 11/02

(54) **Wässrige Pigmentpräparationen für brilliante Ink-Jet-Ausdrucke**

(30) Priorität: 19.02.2005 DE 102005007763
(71) Anmelder: Lanxess Deutschland GmbH & Co.KG, 51369 Leverkusen (DE)
(72) Erfinder: Hermann, Udo, Dr., 41541 Dormagen (DE); Pfuetzenreuter, Dirk, 51399 Burscheid (DE); Hartrumpf, Jürgen, 51375 Leverkusen (DE); Witt, Josef, 51377 Leverkusen (DE); Gesekus, Daniela, 52428 Jülich (DE); Goldau, Gudrun, 51061 Köln (DE)

(57) **Zusammenfassung**

Wässrige Pigmentpräparationen, enthaltend
a) wenigstens ein Pigment
b) wenigstens eine polymere Carbonsäure, die einpolymerisierte gegebenenfalls alokoxylierte alpha-Hydroxi-C₁-C₆-alkyl-acrylsäure-Einheiten enthält und wenigstens eine Komponente c) und/oder d), wobei
c) ein Tensid ist, das nichtionisch und/oder anionisch ist und
d) ein Kondensationsprodukt auf Basis von
A) sulfonierten Aromaten
B) Aldehyden und/oder Ketonen und gegebenenfalls
C) einer oder mehrerer Verbindungen, ausgewählt aus der Gruppe der nicht sulfonierten Aromaten, Harnstoff und Harnstoffderivaten, ist.

## Beschreibung

Die Erfindung betrifft wässrige Pigmentpräparationen, Verfahren zu ihrer Herstellung sowie ihre Verwendung, insbesondere zur Herstellung von Aufzeichnungsflüssigkeiten für den Ink-Jet-Druck.

Wässrige Drucktinten für den Tintenstrahldruck sind sowohl auf Basis wasserlöslicher organischer Farbstoffe als auch auf Basis organischer Farbpigmente bekannt und weitgehend beschrieben. Gegenüber den Farbstoffen liefern Pigmente eine wesentlich höhere Licht- und Ozonstabilität der Ausdrucke. Einer weiten Verbreitung von Pigmenttinten stehen allerdings in manchen Fällen ihre Dispersionseigenschaften entgegen. In einer nicht optimalen Dispersion können die Partikel agglomerieren, so dass sich die Teilchengrößenverteilung verändert. Die Farbstärke der Ausdrucke nimmt ab, Andruckprobleme können entstehen.

Weiterhin können nicht optimale Dispergatorsysteme Strukturen in der wässrigen Phase aufbauen, die ein störungsfreies Fließen der Tinte in den Kapillaren des Druckkopfes behindern .

Ein anderer Ansatz besteht darin, die Pigmente zu funktionalisieren. (US-A-5 554 739 und US-A 5 922 118). Der Nachteil ist allerdings die erhöhte Migrationsneigung und die damit verbundenen geringere Wasserechtheit. Vollständige Absetzstabilität der Dispersionen ist aber auch bei den funktionalisierten Pigmentypen nicht zu finden.

Aufgabe war es nun, Pigmentpräparationen mit geringer Agglomerationsneigung, insbesondere mit einem guten Andruckverhalten bereitzustellen, die brilliante Ausdrucke liefern. Ferner sollte die Stabilität der Dispersionen gegenüber den in den Tinten üblicherweise eingesetzten Netzmitteln und Lösungsmitteln gut sein, so dass der potentielle Anwender keine oder nur geringe Einschränkungen in der Wahl seiner Tintenbestandteile hat.

Es wurden nun wässrige Pigmentpräparationen gefunden, enthaltend
a) wenigstens ein Pigment
b) wenigstens eine polymere Carbonsäure, die einpolymerisierte gegebenenfalls alkoxylierte alpha-Hydroxi-C₁-C₆-alkyl-acrylsäure-Einheiten enthält und wenigstens eine Komponente c) und/oder d), wobei
c) ein Tensid ist, das nichtionisch oder anionisch ist und
d) ein Kondensationsprodukt auf Basis von
   A) sulfonierten Aromaten
   B) Aldehyden und/oder Ketonen und gegebenenfalls
   C) einer oder mehrerer Verbindungen, ausgewählt aus der Gruppe der nicht sulfonierten Aromaten, Harnstoff und Harnstoffderivaten, ist.

Als Pigmente kommen sowohl anorganische als auch organische Pigmente in Frage.

Als organische Pigmente sind hierbei auch Küpenfarbstoffe zu verstehen. Selbstverständlich können die die erfindungsgemäßen Pigmentpräparationen auch Mischungen verschiedener organischer oder anorganischer Pigmente oder organischer und anorganischer Pigmente enthalten. Bevorzugt weisen die Pigmente eine mittlere Teilchengröße von weniger als 220 nm, insbesondere von weniger als 180 nm auf.

### Beispiele für geeignete Pigmente (a) sind dabei:

Organische Pigmente:
- Monoazopigmente:
   C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente:
   C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188,
- Anthanthronpigmente:
   C.I. Pigment Red 168; (C.I. Vat Orange 3);
- Anthrachinonpigmente:
   C.I. Pigment Yellow 147 und 177; C.I. Pigment Violet 31;
- Anthrapyrimidinpigmente:
   C.I. Pigment Yellow 108; (C.I. Vat Yello 20);
- Chinacridonpigmente:
   C.I. Pigment Red 122, 202 und 206; C.I. Pigment Violet 19;
- Chinophthalonpigmente:
   C.I. Pigment Yellow 138;
- Dioxazinpigmente:
   C.I. Pigment Violett 23 und 37,
- Diketopyrrolopyrrolpigmente
   C.I. Pigment Orange 71; C.I. Pigment Red 255; C.I. Pigment Red 254
- Flavanthronpigmente:
   C.I. Pigment Yellow 24; (C.I. Vat Yellow 1);
- Indanthronpigmente:
   C.I. Pigment Blue 60; (C.I. Vat Blue 4) und 64 (C.I. Vat Blue 6);
- Isoindolinpigmente:
   C.I. Pigment Orange 69; C.I. Pigment Red 260; C.I. Pigment Yellow 139 und 185;
- Isoindolinpigmente:
   C.I. Pigment Orange 61; C.I. Pigment Red 257 und 260; C.I. Pigment Yellow 109, 110, 173 und 185;
- Isoviolanthronpigmente:
   C.I. Pigment Violet 31; (C.I. Vat Violet 1);
- Metallkomplexpigmente:
   C.I. Pigment Yellow 117, 150 und 153; C.I. Pigment Green 8;
- Perinonpigmente:
   C.I. Pigment Orange 43; (C.I. Vat Orange 7); C.I. Pigment Red 194; (C.I. Vat 15);
- Perylenpigmente:
   C.I. Pigment Black 31 und 32; C.I. Pigment Red 123, 149, 178, 179, (C.I. Vat Red 23), 190 und 240; C.I. Pigment Violet 29;
- Phthalocyaninpigmente:
   C.I. Pigment Blue 15, 15:1, 15:2, 15:3, 15:4, 15:6 und 16; C.I. Pigment Green 7 und 36;
- Pyranthronpigmente:
   C.I. Pigment Orange 51; C.I. Pigment Red 216; (C.I. Vat Orange 4);
- Thioindigopigmente:
   C.I. Pigment Red 88 und 181; (C.I. Vat Red 1); C.I. Pigment Violet 38; (C.I. Vat Violet 3);
- Triarylcarboniumpigmente:
   C.I. Pigment Blue 1, 61 und 62; C.I. Pigment Green 1; C.I. Pigment Red 81, 81:1 und 169; - C.I. Pigment Black 1 (Anilinschwarz); - C.I. Pigment Yellow 101 (Aldazingelb); - C.I. Pigment Brown 22.

Küpenfarbstoffe (außer den bereits oben genannten):
- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11,17, 25, 32, 33, 35, 38, 39, 41, 42, 44, 45, 49, 50, 55, 57, 68, 72, 73, 80, 81, 82, 83 und 84,
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

Anorganische Pigmente:
- Weißpigmente:
   Titandioxid (C.I. Pigment White 6), Zinkweiß, Farbenzinkoxid; Zinksulfid, Lithopone; Ruße
- Interferenzpigmente:

Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigment sind dabei Monoazopigmente (insbesondere verlackte BONS Pigmente, Naphtol, AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Pyrrolopyrrolpigmente, Triarylcarboniumpigmente (Alkaliblaupigmente, verlackte Rhodamine, Farbstoffsalze mit komplexen Anionen), Isoindolinpigmente und Ruße (insbesondere Gas- oder Ofenruße) zu nennen.

Beispiele für besonders bevorzugte Pigmente sind im einzelnen: C.I. Pigment Yellow 138, Pigment Yellow 74, Pigment Yellow 150, C.I. Pigment Red 122, C.I. Pigment Red 254, C.I. Pigment Violet 19, C.I. Pigment Blue 15:3 und 15:4, C.I. Pigment Black 7, C.I. Pigment Orange 5, 38 und 43 und C.I. Pigment Green 7. C.I. Pigment Green 36.

Besonders bevorzugte Pigmente sind solche vom Typ Ruße, wie Spezialschwarz® 4, Spezialschwarz® 4a, Spezialschwarz® 100, Spezialschwarz® 250, Spezialschwarz® 350 und Spezialschwarz® 550 der Firma Degussa, sowie Farbruße der Typen FW 200, FW 2, FW 2V, FW 285, FW 1, FW 18, S 160, S 170 der Firma Degussa sowie Printex Typen der Firma Degussa.

Überraschend wurde gefunden, dass die erfindungsgemäßen Pigmentpräparationen deutlich bessere Eigenschaften haben als solche mit nur dem unter b) beschriebenen Copolymer.

Mit zunehmender Mahldauer der wässrigen Präparationen, die nur das Copolymer b) enthalten, nehmen die Farbstärke und die Filtrierbarkeit zwar zu, jedoch sinkt die verdruckte Tintenmenge stark ab. Dieser Effekt ist außerdem zeitabhängig, so dass kein stabiles Druckverhalten garantiert werden kann. Auch gelierten derartige Dispersionen nach kurzer Lagerzeit.

Vorzugsweise ergibt der gleichzeitige Einsatz der Komponente b) mit wenigstens einer der Komponente c) und/oder d) Dispersionen, die keine altersabhängige verdruckte Tintenmenge lieferten und auch nach Lagerung bei 50°C flüssig blieben.

In einer bevorzugten Ausführungsform besitzt das gegebenenfalls alkoxylierte Copolymer der Komponente b) eine gegebenenfalls mit Ethylenoxid, Propylenoxid und/oder Butylenoxid, insbesondere mit Ethylenoxid alkoxylierte alpha-Hydroxyethylacrylsäure-Einheiten. Das Copolymer der Komponente b) besitzt vorzugsweise eine Säure Zahl von 40-100 vorzugsweise 55-80 %, einen Alkoxy-, insbesondere Ethoxianteil von 10-35 vorzugsweise von 10 bis 25 Gew.-%, bezogen auf die Komponente b) und eine OH Zahl von vorzugsweise 200-600, insbesondere von 350-480 mg KOH/g Substanz. Die Molmasse beträgt 500-3000 g/Mol, vorzugsweise 1000-2500 g/ Mol.

Die Bestimmungsmethoden für die oben genannten Parameter sind beispielsweise zu finden in:

DGF Einheitsmethoden ISBN 3-8047-1297-5 sowie in Wissenschaftliche Verlagsgesellschaft Stuttgart 1994.

Als weitere, bevorzugte Aufbaukomponente der Comonomere der Komponente b) kommen vorzugsweise (Meth)acrylsäure in Frage. Bevorzugt beträgt das Verhältnis von (Meth)acrylsäure zu der alpha-Hydroxy-C₁-C₆-alkylacrylsäure 4:1 bis 2:1.

Als weitere Aufbaukomponente kommen beispielsweise andere ungesättigte Alkohole mit 6-12 C-Atomen in Frage.

Bevorzugt ist es, die Hydroxyalkylgruppe des Copolymeren b) nach der Polymerisation noch zu alkoxylieren, insbesondere zu ethoxylieren und/oder zu propoxylieren.

Die Grenzflächenspannung des eingesetzten Copolymers der Komponente b) beträgt vorzugsweie mehr als 40•10⁻³ N/m, insbesondere mehr als 45•10⁻³ N/m.

Als Tensidkomponente c) können sowohl Emulgatoren eingesetzt werden, die in einem Molekül nichtionisch und anionisch sind, bevorzugt Oxiethylate von Alkoholen, Carbonsäuren, Aminen und Fettsäureglyceriden mit einer Kettenlänge von jeweils 8-18 C-Atomen, deren Trübungspunkt vorzugsweise oberhalb von 80°C liegt und die vorzugsweise sulfatiert, carboxiliert oder phosphatiert worden sind, als auch Gemische sulfonierter bzw. sulfatierter und oxiethylierter Tenside.

Dabei kommen bei den anionischen Komponenten insbesondere Alkylreste mit 6-18 C-Atomen sowie Alkylbenzolreste mit 4-16 C-Atomen in der Kette in Frage.

Bei der nichtionischen Komponente c) handelt es sich vorzugsweie um ein Oxethylat von Alkoholen, Aminen oder Carbonsäuren mit einer Kettenlänge von 8-18 C-Atomen, dessen Trübungspunkt vorzugsweise oberhalb von 80°C liegt.

Die Grenzflächenspannung des eingesetzten Tensids der Komponente c) beträgt vorzugsweise weniger als 39 10⁻³ N/m.

Bevorzugte Tenside der Komponente c) sind beispielsweise alkoxylierte Polydimethylsiloxane wie beispielsweise Tegopren® 3110 oder Tegopren® 5442, Sulfobernsteinsäureester wie beispielsweise Aerosol® OT sowie alkoxylierte Alltindiole wie beispielsweise Surfinol® 465.

Auch alkoxylierte Alkohole wie beispielsweise Phenol + 2,8 Mol Styrol + 29 Mol EO carboxyliert und Oleylalkohol + 30 Mol EO sind bevorzugte Tenside.

"Auf Basis von" bedeutet, dass das Kondensationsprodukt d) gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Melamin oder Guanidin genannt werden.

Als bevorzugtes Kondensationsprodukt der Komponente d1) wird eines auf Basis von
- A): wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
- B): Formaldehyd und gegebenenfalls
- C): einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt.

Das bei der Kondensation bevorzugt erhaltene Kondensationsprodukt besitzt vorzugsweise einen mittleren Kondensationsgrad von 1 bis 150, besonders bevorzugt von 1 bis 20, insbesondere von 1 bis 5.

Die Kondensationsprodukte der Komponente d) können als wässrige Lösung oder Suspension oder als Feststoff beispielsweise als Pulver oder Granulat, vorzugsweise als sprühgetrocknetes Pulver oder Granulat, eingesetzt werden.

Bevorzugte Kondensationsprodukte der Komponente d) weisen einen anorganischen Salzgehalt von unter 10 Gew.-%, vorzugsweise unter 5 Gew.-%, insbesondere unter 1 Gew.-% auf, bezogen auf die eingesetzte wässrige Lösung bzw. Suspension der Komponente bzw. bezogen auf den eingesetzten Feststoff der Komponente d).

Ebenfalls bevorzugt ist es, restmonomerenarme bis restmonomerenfreie Kondensationsprodukte der Komponente d) einzusetzen.

Unter "monomerenarm" wird ein Restmonomerengehalt von weniger als 30 Gew.-%, vorzugsweise weniger als 20 Gew.-%, bezogen auf das Kondensationsprodukt, insbesondere < 10 Gew.%, vorzugsweise < 5 Gew.%, verstanden. Unter Restmonomeren werden in diesem Zusammenhang, die zur Herstellung des Kondensationsproduktes eingesetzten Reaktanden verstanden.

Derartige salzarme und restmonomerenarme Kondensationsprodukte sind beispielsweise aus EP-A 816 406 bekannt.

Die Kondensationsprodukte der Komponente d) können beispielsweise dadurch hergestellt werden, dass man zunächst die sulfonierten Aromaten der Komponente A) gegebenenfalls im Gemisch mit nicht sulfonierten Aromaten der Komponente C) durch Umsetzung der zugrundliegenden Aromaten mit einem Sulfonisierungsmittel vorzugsweise Schwefelsäure, insbesondere konzentrierte Schwefelsäure, Chlorsulfonsäure, Amidosulfonsäure oder Oleum, herstellt.

Auf 1 mol des der Komponente A) zugrundeliegenden Aromaten werden vorzugsweise 0,4 bis 3,2 mol, insbesondere 0,8 bis 1,6 mol Sulfonierungsmittel eingesetzt.

Anschließend erfolgt die Kondensation mit Aldehyden und/oder Ketonen der Komponente B), vorzugsweise Formaldehyd, gegebenenfalls zusammen mit weiteren Verbindungen der Komponente C). Die Kondensation erfolgt vorzugsweise in wässriger Lösung bei einem pH-Wert von 0 bis 9. Hierbei werden vorzugsweise pro Mol des sulfonierten Aromaten A) bzw. pro Mol einer Mischung aus sulfonierten Aromaten der Komponente A) und nicht sulfonierten Aromaten der Komponente C) 0,4 bis 1,5 mol, insbesondere 0,4 bis 1,0 mol der Komponente B) eingesetzt.

Daran schließt sich gegebenenfalls die Neutralisation des sulfonsauren Kondensationsproduktes der Komponente d) mit einer Base an.

Die Komponente b) wird vorzugsweise in einer Menge von 5-200 Gew.-%, insbesondere 5-80 %, bezogen auf das Gewicht des Pigmentes a) eingesetzt.

Die beiden Komponenten c) und d) werden in Summe vorzugsweise von 1-80 %, insbesondere von 5-40 %, bezogen auf Pigment a) eingesetzt.

Bevorzugte wässrige Pigmentpräparationen enthalten
- 0,2 bis 50, vorzugsweise 1 bis 35 Gew.-% wenigstens eines Pigments der Komponente a)
- insgesamt 5 bis 40 Gew.-% der Komponenten b), c) und d) und
- 1 bis 88, vorzugsweise 5-60 Gew.-% wässriges Medium.

Als wässriges Medium ist entweder Wasser allein oder ein Gemisch aus Wasser mit organischen Lösungsmitteln zu verstehen, wobei diese vorzugsweise eine Wasserlöslichkeit von mehr als 5 g/l bei 20°C aufweisen.

Bevorzugt besteht das wässrige Medium aus mehr als 60 Gew.-%, vorzugsweise mehr als 65 Gew.-%, insbesondere mehr als 80 Gew.-% Wasser.

### Als geeignete organische Lösungsmittel kommen in Frage:

Aliphatische C₁-C₄-Alkohole, linear oder verzweigt, aliphatische Ketone wie Aceton, Methylethylketon, Diacetonalkohol, Polyole wie 1,5-Pentandiol, Trimethylolpropan, Ethylenglycol, Diethylenglycol, Triethylenglycol, Polyglycole mit einer Molmasse von 200-2000 g/mol, Propylenglycol, Dipropylenglycol, Tripropylenglycol, Glycerin und Thiodiglycol, und 1,2,6-Hexantriol, 2-Pyrrolidon, N-Methylpyrrolidon, N-Ethylpyrrolidon, 1,3-Dimethylimidazolidinon, Dimethylacetamid sowie Dimethylformamid.

Auch Gemische der erwähnten Lösungsmittel kommen in Betracht.

Die Erfindung betrifft weiterhin ein Verfahren zur Herstellung der erfindungsgemäßen Pigmentpräparation, das dadurch gekennzeichnet ist, dass die Komponenten a) bis d) soweit verwendet zusammen mit Wasser homogenisiert werden, anschließend gegebenenfalls von groben Partikeln befreit werden vorzugsweise mittels einer 1-10 µm Membran, einem Glasfilter oder Papiertuch und gegebenenfalls getrocknet wird.

Zur Homogenisierung werden die Einzelkomponenten vorzugsweise in einem Dissolver angeschlagen und anschließend in einer Hochenergieperlmühle beispielsweise mit Zirkonoxidperlen gemahlen.

Die Präparation wird in der Regel danach filtriert, beispielweise über 1-10 µm Membran- oder Glasfaserfilter.

Die erfindungsgemäßen Pigmentpräparationen zeigen eine hervorragende Lagerstabilität und liefern sowohl auf thermischen bubble jet-(HP, Encad) als auch auf Piezodruckern (Epson, Mutoh) Drucke mit ausgezeichneter Lichtechtheit. Darüber hinaus besitzen sie noch folgende Vorteile:

Keine Verstopfung des Druckkopfes, sowie eine hohe Wasser- und Migrationsechtheit. Gute Stabilität der Dispersion gegenüber Lösungsmitteln wie 1,2-Propandiol, 2,2'-Thiodiethanol, Glycerin, Diethylenglycol, Triethylenglycol, 2-Pyrrolidon, 1,5-Pentandiol, Isopropanol, Dipropylenglycol, Tripropylenglycol, 1,2-Hexantriol und Netzmitteln wie Tegopren® 3110, Tegopren® 5442 (jeweils alkoxylierte Polydimethylsiloxane), Aerosol® OT (Sulfobernsteinsäureester), Surfinol® 465 (alkoxylierte Alkindiole).

Tegopren® ist ein Produkt der Degussa, Aerosol® OT ist ein Produkt der Cyanamid, Surfinol® 465 ist ein Produkt der Air products.

Die Grundlagen der Farbmessung sind zu finden in:

Farbmessung BAYER Farben Revue, Sonderheft 3/2D (1986)

Die erfindungsgemäßen wässrigen Pigmentpräparationen können vorteilhaft zum Bedrucken von flächigen oder dreidimensional gestalteten Substraten in Ink-Jet-Verfahren eingesetzt werden, welches dadurch gekennzeichnet ist, dass man die Ink-Jet-Tinten auf das Substrat aufdruckt und den erhaltenen Druck gewünschtenfalls anschließend fixiert.

Beim Ink-Jet-Verfahren werden die üblicherweise wässrigen Tinten in kleine Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochener Tintenstrahl (z.B. nach dem "Drop-on-Demand"-Verfahren), bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen aus der Düse herausgeschleudert. Solche Verfahrensweisen sind in Text Chem. Color, Band 19 (8), Seiten 23 bis 29, 1987, und Band 21 (6), Seiten 27 bis 32. beschrieben.

Besonders geeignet sind die erfindungsgemäßen Ink-Jet-Tinten für das Bubble-Jet-Verfahren und für das Druckverfahren mittels eines piezoelektrischen Kristalls.

Ist eine Fixierung des Drucks erwünscht, so kann man auf bekannte Weise und wie in der WO-A-99/01516 beschrieben vorgehen und z.B. ein Bindemittel, gewünschtenfalls in Form einer Dispersion oder Emulsion, auf das bedruckte Substrat auftragen und härten oder eine Folie auflaminieren.

Weitere Einzelheiten zu diesen Bindemitteln sind der WO-A-99/01516 zu entnehmen.

Die erfindungsgemäßen wässrigen Präparationen können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materalien wie Glas, Prozellan und Keramik, die ebenfalls beschichtet sein können,
- polymere Materialien jeder Art wie Polyamide, Polyester, hydrophiliertes Polyethylen,
- hydrophiliertes Polypropylen, Melaminharze, Polyacrylate, Polyacrylniril, Polyurethane, Polycarbonate, Polyvinylchlorid, Polyvinylalkohole, Polyvinylacetate, Polyvinylpyrrolidone und entsprechende Copolymer und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

Die wässrigen Aufzeichnungsflüssigkeiten (Tinten) werden vorzugsweise dadurch erhalten, dass die nach dem erfindungsgemäßen Verfahren erhaltenen Pigmentpräparationen durch Zugabe von Wasser und/oder organischen Lösungsmitteln auf die gewünschte Farbstärke eingestellt werden.

### Beispiele:

Basisflüssigkeit für Druckversuche von Pigmenttinten:
15 % 1,5 Pentandiol
10 % Polyglycol 200
5 % 2-Pyrrolidon
70 % vollentsalztes Wasser

Referenztinten für die Beispiele sind die HP-UV Tinten für den HP 2000 Drucker. Diese sind wie folgt gekennzeichnet.

Die UV Tinten für den HP 2000 Designjet enthalten folgende Pigmente :

| | | |
|---|---|---|
| Magenta : | C 1894A UV | 3 % Pigment Red 122 |
| Cyan : | C 1893A UV | 1,8 % Pigment Blue 15:3 |
| Gelb : | C 1895A UV | 1,6 % Pigment Yellow 74 |
| Schwarz : | C 1892A UV | 5 % Ruß |

jeweils bezogen auf die Tinte.

Die Farbstärken in den Beispielen wurden mit einem Byk-Gardner Farbmeßgerät gegen Ausdrucke dieser HP Tinten auf den identischen Papieren vermessen. Die typische Tintenmenge pro Testseite beträgt 0,5 g für die HP UV Tinten.

### Vergleichsbeispiel 1(nur Copolymer der Komponente b))

Am Dissolver werden 3,2 kg vollentsalztes Wasser ( VE Wasser ) und 300 g des Copolymers b) mit einer OH-Zahl von 460, einer Säurezahl von 76 und einem Ethoxygehalt von 22 % vorgelegt. Langsam streut man 1,5 kg P.Y. 74 ein ( 15 Minuten ) und homogenisiert 30 Minuten. Die Suspension wird anschließend mit einer Drais V-15 Perlmühle und Zirkonoxidperlen (0,7-0,9 mm) gemahlen. Nach 45, 90 und 150 Minuten werden Proben gezogen, mit der Basisflüssigleit eine Tinte mit einer Pigmentkonzentraion von 1,5 % hergestellt und diese Tinte auf einem HP 6122 Tintenstrahldrucker (bubble jet) auf ein Papier mit 90 g/m² beispielsweise HP Bright white® Papier verdruckt.

| Mahlzeit | Ausdruckmenge | Farbstärke |
|---|---|---|
| 45 Minuten | 0,44 g | 160 % |
| 45 Minuten | 0,34 g | 120 % |
| 150 Minuten | 0,16 g | 40 % |

Mit zunehmender Mahlzeit nimmt die verdruckte Menge Tinte pro Testseite ab.

### Beispiel 1

Am Dissolver werden 3,15 kg vollentsalztes Wasser (VE Wasser), 200 g Copolymer aus dem Vergleichsbeispiel, 50 g eines Tensidgemisch (30 % wässrige Lösung enthaltend 1:1 Gemisch, anionisches Tensid (Sulfonat/Sulfat) mit einer mittleren Kettenlänge von 12 C-Atomen und nichtionisches Tensid mit einer mittleren Kettenlänge von 12-14 C-Atomen und einem Oxiethylierungsgrad von 20); (≙ Dispense Ayd W-22) und 2 % (bezogen auf Gesamteinwaage) eines entsalzten Naphthalinsulfonsäure-Formaldehyd Kondensates (Molmasse ca. 1100 g/mol) vorgelegt. Langsam streut man 1,5 kg P.Y. 74 ein ( 15 Minuten ) und homogenisiert 30 Minuten. Die Suspension wird anschließend mit einer Drais V-15 Perlmühle und Zirkonoxidperlen (0,7-0,9 mm) 4 Stunden gemahlen. Jede Stunde wird eine Probe gezogen. Die Dispersion wird über 10 µm Filter von Grobanteilen gereinigt.

Durch Zugabe der Basisflüssigkeit wird eine Tinte mit einer Pigmentkonzentration von 1,5 Gew.-% hergestellt und diese Tinte auf einem HP 6122 Tintenstrahldrucker auf einem 90 g/m²-Papier (HP Bright white Papier) verdruckt.

| **Mahlzeit** | **ausgedruckte Menge** | **Farbstärke** |
|---|---|---|
| 60 Minuten | 0,45 g | 200 % |
| 120 Minuten | 0,48 g | 240 % |
| 180 Minuten | 0,5 g | 260 % |
| 240 Minuten | 0,51 g | 270 % |

### Beispiel 2

Am Dissolver werden 3642 g VE Wasser, 200 g des Copolymers aus dem Vergleichsbeispiel und 142,9g Tensidgemisch aus Beispiel 1 (35 %ige Lösung) vorgelegt. 1000g Pigment Rot 254 werden unter Rühren eingestreut und die Dispersion homogenisiert. Die Suspension wird anschließend mit einer Drais V-15 Perlmühle und Zirkonoxidperlen (0,7-0,9 mm) 1,5 Stunden gemahlen und anschließend über 10 µm Filter von Grobanteilen gereinigt. Die durch dynamische Streulichtmessung bei 90°(Winkelmaß) ermittelte Teilchengröße betrug 150 nm.

Durch Zugabe der Basisflüssigkeit wird eine Tinte mit einer Pigmentkonzentration von 3 Gew-% hergestellt, über 5 µm filtriert und diese Tinte auf einem HP 6122 Tintenstrahldrucker auf HP Bright white und HP Premium Papier verdruckt.
Ausdruckmenge = 0,48 g
Der Farbort auf HP® Bright White Papier liegt bei L=57,7, a= 48,6, b= 19,4
Der Farbort auf HP® Premium Papier liegt bei L=49,7, a= 61 , b= 39

### Beispiel 3

290,6 g VE Wasser, 16 g des Copolymers c) aus Beispiel 1, 11,4 g 35 %-ige Lösung des Tensidgemisches aus Beispiel 1 und 2 g eines entsalzten Naphthalinsulfonsäure-Formaldehyd Kondensates (Molgewicht ca 1100 g/mol) werden am Dissolver vorgelegt und 80 g Pigment Orange 64 eingestreut.

Die Suspension wird mit 400 ml Zirkonsilikat Perlen ( 0,6-0,8 mm) 2 Stunden in einer Süßmeier Labormühle gemahlen. Die durch dynamische Streulichtmessung bei 90° ermittelte Teilchengröße betrug 160 nm.

Durch Zugabe der Basisflüssigleit wird eine Tinte (1,5% Pigmentgehalt) hergestellt, über 5 µm filtriert und auf einem Epson Stylus Color 760 Drucker ausgegeben.

Der Farbort auf HP Premium Papier liegt bei L=59, a= 52, b= 49.

### Beispiel 4

1204,5 g VE Wasser, 120g Copolymer c) aus Beispiel 1, 85,7g Tensidgemisch aus Beispiel 1 (35 %ige Lösung), und 15g eines entsalzten Naphthalinsulfonsäure -Formaldehyd Kondensates (MW=1100 g/mol) werden am Dissolver vorgelegt. Innerhalb von 15 Minuten gibt man 1565,8 g feuchten Presskuchen von Pigment Gelb 150 (47,9 %ig) zu . Die homogene Suspension wird in einer Drais V-15 Perlmühle mit 0,7-0,9 Zirkonoxid Perlen 1 Stunde im Kreislauf gemahlen.

Die Teilchengröße betrug 127 nm (ermittelt durch dynamische Streulichtmessung bei 90° Winkelmaß).

Mit der Basisflüssigkeit stellt man eine Tinte von 1,5 Gew.-% Pigmentgehalt her, filtriert über 5 µm und verdruckt auf einem HP 6122 Drucker. Die verdruckte Menge pro Seite beträgt 0,5 g und die Farbstärke auf HP Bright White ist 155 %.

### Beispiel 5

1773,9 g VE Wasser, 180 g eines Copolymers c) aus Beispiel 1, 257g Tensidgemisch (aus Beispiel 1) (35%ig) und 30 g eines entsalzten Naphthalinsulfonsäure-Formaldehyd-Kondensates (aus Beispiel 3) werden am Dissolver vorgelegt. 750g Pigment Blau 15:3 werden eingestreut und die Suspension homogenisiert. In einer Drais V-15 Perlmühle (0,7-0,9 mm Perlen) wird 1 Stunde im Kreislauf gemahlen. Die Teilchengröße betrug 130 nm. Nach Filtration über 10 µm wird mit der Basisflüssigkeit eine Tinte mit einem Pigmentgehalt von 1,8 Gew.-% hergestellt und auf einem HP 6122 Drucker verdruckt. Die verdruckte Menge pro Testseite betrug 0,45g. Die Farbstärke betrug 180 % auf HP Bright White- und 170 % auf HP Premium Papier.

### Beispiel 6

2035 g VE Wasser, 180 g eines Copolymers aus Beispiel 1, 90g eines entsalzten Naphthalinsulfonsäure-Formaldehyd Kondensates (MW = 1100 g/mol), und 85,7 g einer 35 %-ige Lösung des Tensidgemisches aus Beispiel 1 werden am Dissolver vorgelegt. 600 g Pigment Rot 122 werden eingestreut und homogenisiert. In einer Drais V-15 Perlmühle ( 0,7-0,9 mm Perlen ) wird 3 Stunden im Kreislauf gemahlen. Die Teilchengröße betrug 115 nm. Nach Filtration über 10 µm wird mit der Basisflüssigkeit eine Tinte mit einem Pigmentgehalt von 3 Gew.-% hergestellt und auf einem HP 6122 Drucker verdruckt. Pro Testseite werden 0,48g verdruckt. Die Farbstärke beträgt 110 % auf HP Bright white Papier.

### Beispiel 7

186,9 g VE Wasser, 32g eines Copolymers aus Beispiel 1, 8 g des Tensidgemisches aus Beispiel 3 und 8 g eines entsalzten Naphthalinsulfonsäure-Formaldehyd-Kondensates aus Beispiel 3 legt man am Dissolver vor und streut 140g Pigment Grün 36 ein. Nach Homogenisierung mahlt man die Suspension in einer Laborperlmühle Typ Süßmeier mit 0,6-0,8 mm Zirkonoxidperlen 4 Stunden. Die Teilchengröße betrug 140 nm. Durch Zugabe der Basisflüssigkeit wird eine Tinte hergestellt, die 1,8 % Pigmentgehalt aufweist. Nach Filtration über 5 µm verdruckt man auf einem HP 6122 Drucker. Pro Testseite werden 0,38 g auf HP Bright White Papier verdruckt.

### Beispiel 8

Die Tinten aus Beispiel 1 (gelb ), Beispiel 5 (cyan ) und Beispiel 6 (magenta ) werden in einem Großformatplotter Encad Novajet® 700 eingesetzt. Es wird auf Euromedia Perstex B1, einer wasserbeständigen kratzfesten Folie aus Polyester ausgedruckt.

Die Drucke sind brilliant und ohne weitere Fixierung gegen Waschlösung bei 30°C beständig. (0,2 % Waschmittel Decaethoxy Nonylphenol, bezogen auf Gesamtmenge, 30 Minuten Rühren des Gewebes).

### Beispiel 9

Die Tinten aus Beispiel 2 und Beispiel 6 werden im Verhältnis 1:8 gemischt, um ein sehr brilliantes Magenta zu erhalten. Die Tinten aus Beispiel 1 (gelb) und Beispiel 5 (cyan) werden mit der Mischung in einem ENCAD Großformatplotter Novajet 700 eingesetzt.

Die Ausdrucke auf Polyestergewebe sind brilliant und abriebfest ohne spezielle Fixierung. Eine 30°C-Wäsche beeinträchtigt die Ausdrucke nicht. (0,2% Waschmittel, 30 Minuten Rühren des Gewebes).

### Beispiel 10

Die Pigmentdispersion aus Beispiel 5 ( Pigment Blau 15:3 ) wird mit je 10% Lösungsmittel versetzt, 2 Tage bei 65°C gelagert, dann wird wieder mit der Basisflüssigkeit die Standardtinte hergestellt und der Ausdruck mit dem Original aus Beispiel 5 verglichen.

| Lösungsmittel | Konsistenz | verdruckte Menge pro Testseite | Farbstärke |
|---|---|---|---|
| 10 % 1,2-Propanol | dünnflüssig | 0,44 g | 170 % |
| 10 % 2,2'-Thiodiethanol | dünnflüssig | 0,48 g | 180 % |
| 10 % Glycerin | dünnflüssig | 0,45 g | 165 % |
| 10 % 1,5-Pentandiol | dünnflüssig | 0,43 g | 150 % |
| 10 % 2-Pyrrolidon | dünnflüssig | 0,47 g | 170 % |
| 10 % Isopropanol | dünnflüssig | 0,42 g | 150 % |
| 10 % Ethandiol | dünnflüssig | 0,45 g | 160 % |
| 10 % Dipropylenglycol | dünnflüssig | 0,46 g | 165 % |
| 10 % 2-Methyl-2-propanol | dünnflüssig | 0,44 g | 160 % |
| 10 % Butyldiglycol | dünnflüssig | - | - |

## Patentansprüche

1. Wässrige Pigmentpräparationen, enthaltend
a) wenigstens ein Pigment
b) wenigstens eine polymere Carbonsäure, die einpolymerisierte gegebenenfalls alkoxylierte alpha-Hydroxi-C₁-C₆-alkyl-acrylsäure-Einheiten enthält und wenigstens eine Komponente c) und/oder d), wobei
c) ein Tensid ist, das nichtionisch und/oder anionisch ist und
d) ein Kondensationsprodukt auf Basis von
A) sulfonierten Aromaten
B) Aldehyden und/oder Ketonen und gegebenenfalls
C) einer oder mehrerer Verbindungen, ausgewählt aus der Gruppe der nicht sulfonierten Aromaten, Harnstoff und Hamstoffderivaten, ist.

2. Pigmentpräparationen gemäß Anspruch 1 enthaltend die Komponente b) in einer Menge von 5-40 Gew.-%, bezogen auf das Pigment der Komponente a).

3. Pigmentpräparationen gemäß wenigstens einem der vorangegangenen Ansprüche, enthaltend die Komponente c) und/oder d) in einer Menge von insgesamt 5-40 Gew.-%, bezogen auf Pigment a).

4. Pigmentpräparationen gemäß wenigstens einem der vorangegangenen Ansprüche, **dadurch gekennzeichnet, dass** als Komponente c) Oxiethylate von Alkoholen, Carbonsäuren, Aminen und Fettsäureglyceriden mit einer Kettenlänge von jeweils 8-18 C-Atomen, deren Trübungspunkt vorzugsweise oberhalb von 80°C liegt und die vorzugsweise sulfatiert, carboxiliert oder phosphatiert worden sind, als auch Gemische sulfonierter bzw. sulfatierter und oxiethylierter Tenside enthalten sind.

5. Pigmentpräparationen gemäß wenigstens einem der vorangegangenen Ansprüche, **dadurch gekennzeichnet, dass** als Komponente d) wenigstens ein Kondensationsprodukt auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl; insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
enthalten ist.

6. Pigmentpräparationen gemäß wenigstens einem der vorangegangenen Ansprüche, **dadurch gekennzeichnet, dass** der Restmonomerengehalt des Kondensationsproduktes der Komponente d) weniger als 30 Gew.-%, vorzugsweise weniger als 20 Gew.-%, bezogen auf das Kondensationsprodukt, insbesondere <10 Gew.-%, vorzugsweise < 5 Gew.-%, beträgt.

7. Pigmentpräparationen gemäß wenigstens einem der vorangegangenen Ansprüche, **dadurch gekennzeichnet, dass** die Komponente a) Pigment Rot 122 und Pigment Rot 254 , enthält.

8. Pigmentpräparationen gemäß wenigstens einem der vorangegangenen Ansprüche, **dadurch gekennzeichnet, dass** die Komponente a) C.I. Pigmentgelb 74, C.L. Pigmentblau 15:3 oder C.I. Pigmentrot 122 oder Pigment Rot 122 und Pigment 254 enthält.

9. Verwendung der Pigmentpräparation gemäß wenigstens einem der vorangegangenen Ansprüche zum Bedrucken von flächigen oder dreidimensional gestalteten Substraten mittels ink-jet mit und ohne nachträglicher Fixierung.
